(19) Europäisches Patentamt
European Patent Office
Office européen des brevets

(11) **EP 4 624 182 A1**

(12) **EUROPEAN PATENT APPLICATION**

(43) Date of publication:
**01.10.2025 Bulletin 2025/40**

(21) Application number: **25164044.7**

(22) Date of filing: **17.03.2025**

(51) International Patent Classification (IPC):
**B41M 3/06** *(2006.01)*   **B41M 3/16** *(2006.01)*
**B41M 3/18** *(2006.01)*   **B44C 3/02** *(2006.01)*
**B41M 7/00** *(2006.01)*

(52) Cooperative Patent Classification (CPC):
**B41M 3/06;** B41M 3/16; B41M 3/18; B41M 7/009;
B44C 3/025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 21.03.2024 JP 2024044931
21.03.2024 JP 2024044932
21.03.2024 JP 2024044933
10.03.2025 JP 2025037322

(71) Applicant: **CANON KABUSHIKI KAISHA**
**Tokyo 146-8501 (JP)**

(72) Inventors:
• **TANAKA, Takatoshi**
**Tokyo (JP)**
• **HERLAMBANG, Olivia**
**Tokyo (JP)**
• **OMAGARI, Toshihiro**
**Tokyo (JP)**

(74) Representative: **WESER & Kollegen**
**Patentanwälte PartmbB**
**Radeckestraße 43**
**81245 München (DE)**

(54) **RECORDING MEDIUM, AND METHOD FOR MANUFACTURING RECORDED MATTER HAVING STEREOSCOPIC IMAGE**

(57)    The recording medium (10) for stereoscopic image formation includes a substrate (11) and a foam layer (12) provided on the substrate (11) and containing a microcapsule-type foam particle (13) that foams by heat, a water-insoluble thermoplastic resin (14), and a polyvinyl alcohol (15). The thermoplastic resin (14) is dispersed in the foam layer (12) by a surfactant. The polyvinyl alcohol (15) has a saponification degree of 70% or more and 92% or less and a polymerization degree of 1,000 or less. The mass ratio of the content (mass%) of the polyvinyl alcohol (15) to the content (mass%) of the thermoplastic resin (14) in the foam layer (12) is 0.10 or more and 0.40 or less.

FIG. 1

**Description**

BACKGROUND

Technical Field

The present disclosure relates to a recording medium and a method for manufacturing a recorded matter having a stereoscopic image.

Description of the Related Art

A printing technique of stereoscopic images has been adopted as a technique for printing wallpaper, braille, and so on. It is known that stereoscopic images are usually formed by a system of re-coating with UV ink, a system of physical extrusion such as embossment, a system of using a 3D printer, a system of using heat-expandable plastic foam, or the like. In particular, the heat-expandable plastic foam is a material that can easily express various characteristics such as heat shielding, heat insulation, sound insulation, sound absorption, vibration prevention, and lightweight properties depending on the material of the foam, the state of the foam to be formed, and so on.

For example, it has been proposed a method of forming a stereoscopic image by applying a plasticizer for a foaming capsule-forming resin to a stereoscopic image formation layer containing the foaming capsule and provided to a recording material and then foaming the foaming capsule by heating (Japanese Patent Laid-Open No. 10-129116). It also has been proposed a recording medium provided with a foam layer that allows a foaming promotion liquid to efficiently permeate to the depth direction in order to form a stereoscopic image with a large foam height to express a clear feeling of unevenness (Japanese Patent Laid-Open No. 2023-138415).

As digital printing speeds increase, there is a demand for accommodation to an increase in the printing speed also in the formation of stereoscopic images. In addition, from the viewpoint of environmental considerations, there is a demand for a method of forming a stereoscopic image at lower temperature conditions. Furthermore, when the formed stereoscopic image is used as a label or the like in daily life, since contact with water is unavoidable, a recording medium having water resistance is required.

The present inventors examined the method of forming a stereoscopic image proposed in Japanese Patent Laid-Open No. 10-129116. As a result, it was demonstrated that the method proposed in Japanese Patent Laid-Open No. 10-129116 requires to secure sufficient permeation time and forms a stereoscopic image having a desired height only under certain high temperature conditions. It was also demonstrated that the method proposed in Japanese Patent Laid-Open No. 10-129116 is insufficient also from the viewpoint of water resistance of the recording medium.

In addition, the present inventors examined the recording medium proposed in Japanese Patent Laid-Open No. 2023-138415. As a result, it was demonstrated that the recording medium proposed in Japanese Patent Laid-Open No. 2023-138415 can form stereoscopic images at relatively high speed and low temperature conditions. However, it is not necessarily sufficient from the viewpoint of a further increase in speed, and it was also demonstrated that there is a room for improvement from the viewpoint of water resistance.

SUMMARY

The present disclosure is directed to providing a recording medium for stereoscopic image formation, allowing to form a stereoscopic image expressing a clear feeling of unevenness by high-speed printing at a low temperature and having excellent water resistance. The present disclosure is also directed to providing a method for manufacturing a recorded matter having a stereoscopic image expressing a clear feeling of unevenness and having excellent water resistance.

The present disclosure in its first aspect provides a recording medium as specified in claims 1 to 17.

The present disclosure in its second aspect provides a method for manufacturing a recorded matter as specified in claims 18 and 19.

Further features of the present disclosure will become apparent from the following description of exemplary embodiments with reference to the attached drawings.

BRIEF DESCRIPTION OF THE DRAWINGS

Fig. 1 is a cross-sectional view schematically illustrating an embodiment of a recording medium of the present disclosure.

Fig. 2 is a schematic view illustrating a schematic configuration of an embodiment of an apparatus for manufacturing a recorded matter having a stereoscopic image that is used in the method for manufacturing a recorded matter of the present disclosure.

Figs. 3A to 3C are schematic views of illustrating specific examples of arrangement of a foaming promotion liquid application device, a heating device, and an ink application device in an apparatus for manufacturing a recorded matter having a stereoscopic image.

DESCRIPTION OF THE EMBODIMENTS

The present disclosure will now be described in detail with reference to exemplary embodiments. In the present disclosure, when a compound is a salt, although the salt is dissociated and present as an ion in an aqueous ink, it is expressed as "containing a salt" for convenience. An aqueous ink for ink jet may be simply referred to as "ink". Physical values are values are values at a normal temperature (25°C), a normal pressure (1 atmosphere = 101,325 Pa), and a normal humidity (relative humidity: 50%) unless otherwise noted.

Recording medium

When trying to foam a stereoscopic image with a sufficient height by promoting the foamability of foam particles using a foaming promotion liquid containing a foaming promotion component, it is important to allow the foaming promotion liquid to rapidly permeate in the depth direction of a foam layer. It is important to efficiently soften the shell layer of microcapsule-type foam particles by keeping the foaming promotion liquid near the foam particles for a long time. Furthermore, considering cases of using the stereoscopic image in daily life and so on, since contact with water is unavoidable, it is also important that a recording medium have water resistance.

As a result of examination, the present inventors found that a recording medium for stereoscopic image formation that can form a stereoscopic image expressing a clear feeling of unevenness and having excellent water resistance by high-speed printing at a lower temperature can be obtained by satisfying the following requirements (i) to (iv), and arrived at the following features:

(i) The recording medium for stereoscopic image formation includes a substrate and a foam layer provided on the substrate and containing a microcapsule-type foam particle that foams by heat, a water-insoluble thermoplastic resin, and a polyvinyl alcohol;
(ii) The thermoplastic resin is dispersed in the foam layer by a surfactant;
(iii) The polyvinyl alcohol has a saponification degree of 70% or more and 92% or less and a polymerization degree of 1,000 or less; and
(iv) The mass ratio of the content (mass%) of the polyvinyl alcohol to the content (mass%) of the thermoplastic resin in the foam layer is 0.10 or more and 0.40 or less.

The polyvinyl alcohol is a component taking on a role of allowing the foaming promotion liquid to rapidly permeate in the depth direction of the foam layer. In addition, since its swelling action allows the foaming promotion liquid to effectively remain in the entire depth direction of the foam layer, the foam particles can effectively foam by using the polyvinyl alcohol.

When a polyvinyl alcohol having a saponification degree of 70% or more and 92% or less and a polymerization degree of 1,000 or less is used, in a wet state applied with the foaming promotion liquid, inhibition of foaming due to entanglement of the polyvinyl alcohol itself hardly occurs, and the foam particles can effectively foam. When the saponification degree of the polyvinyl alcohol is less than 70%, the number of hydroxyl groups is insufficient to decrease the absorbency, and the foam height tends to be insufficient. In contrast, when the saponification degree of the polyvinyl alcohol is greater than 92%, crystallization of the polyvinyl alcohol excessively progresses to decrease the absorbency, and the foam height tends to be insufficient.

When the polymerization degree of the polyvinyl alcohol is greater than 1,000, in a wet state applied with the foaming promotion liquid, the polyvinyl alcohol itself easily gets entangled, and the entangled polyvinyl alcohol inhibits foaming, and thereby the foam height tends to be insufficient.

The water-insoluble thermoplastic resin (hereinafter, also simply referred to as "thermoplastic resin") is a compound (binder resin) functioning as a binding material for allowing foam particles to remain in the foam layer. The thermoplastic resin is also a component taking on a role of maintaining the adherence between the foam layer and the substrate before, during, and after foaming. It is important that the thermoplastic resin be dispersed in the foam layer by the surfactant. When the thermoplastic resin is not dispersed by the surfactant and is dispersed by only a water-soluble resin, since the water resistance of the water-soluble resin itself is low, the water resistance of the recording medium tends to be insufficient.

In the foam layer, the mass ratio of the content (mass%) of the polyvinyl alcohol to the content (mass%) of the thermoplastic resin is 0.10 or more and 0.40 or less. The water resistance of the recording medium can be improved by adjusting the mass ratio within the above-mentioned range. When the mass ratio is greater than 0.40, the rate of the polyvinyl alcohol in the foam layer is too high, and the water resistance of the recording medium tends to be insufficient. In contrast, when the mass ratio is less than 0.10, the rate of the polyvinyl alcohol in the foam layer is too small. Accordingly, although the water resistance of the recording medium is improved, the absorbency decreases, and the foam height tends to be insufficient.

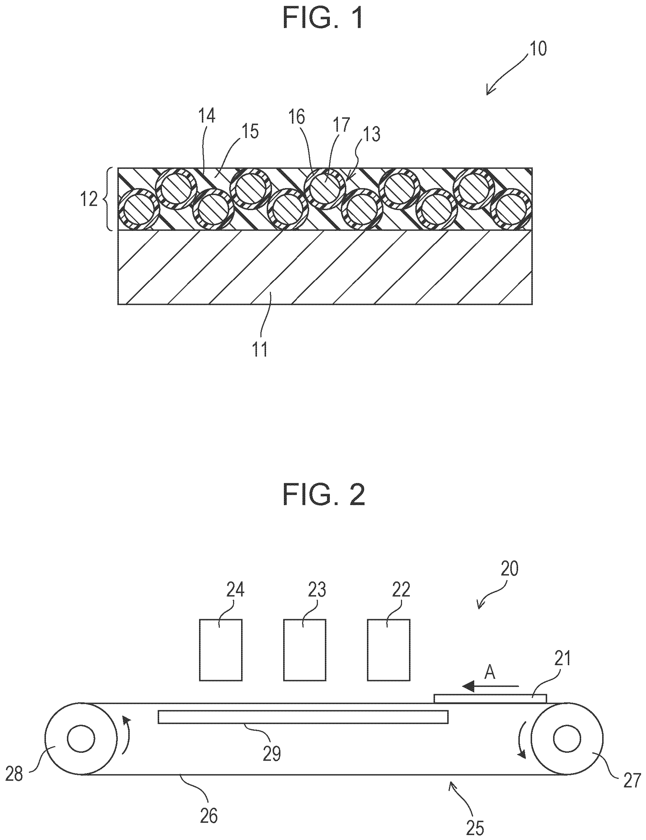

Fig. 1 is a cross-sectional view schematically illustrating an embodiment of the recording medium of the present disclosure. As shown in Fig. 1, the recording medium 10 includes a substrate 11 and a foam layer 12 provided on the substrate 11 and containing foam particles 13 that foam by heat. The details of the recording medium that is used in the method for manufacturing the recorded matter of the present disclosure will be described below.

Substrate

The substrate 11 functions as a supporting member for supporting the foam layer 12 (Fig. 1). The type of the substrate is not particularly limited. Examples of the substrate include paper made from normal natural pulp; kenaf paper; plastic film sheets such as polypropylene, polyethylene, and polyester sheets; and imitation paper of a synthetic fiber, synthetic pulp, or a synthetic resin film, so-called synthetic paper and nonwoven fabric.

Foam layer

Foam particle

As shown in Fig. 1, the foam layer 12 is a layer provided on at least one surface of the substrate 11 and containing foam particles 13, a water-insoluble thermoplastic resin 14, and a polyvinyl alcohol 15 which is a water-soluble resin. The foam particles 13 are a heat-expandable microcapsule-type foam particle including a capsular shell layer 16 made of a thermoplastic resin and a volatile material 17 encapsulated in this shell layer 16. Application of heat to the foam particles 13 softens the resin constituting the shell layer 16 and also vaporizes the volatile material 17 encapsulated in the shell layer 16 to cause volume expansion. Consequently, the foam particles 13 expand like a balloon.

Examples of the thermoplastic resin constituting the shell layer include polystyrene, a styrene-acrylic acid ester copolymer, a polyamide resin, a polyacrylic acid ester, polyvinylidene chloride, polyacrylonitrile, polymethyl methacrylate, a vinylidene chloride-acrylonitrile copolymer, a methacrylic acid ester-acrylic acid copolymer, a vinylidene chloride-acrylic acid copolymer, and a vinylidene chloride-acrylic acid ester copolymer. In particular, the resin constituting the shell layer can be polyacrylonitrile.

Examples of the volatile material include low molecular weight hydrocarbons such as ethane, ethylene, propane, propene, n-butane, isobutane, n-pentane, isopentane, neopentane, n-hexane, heptane, and petroleum ether; chloro-fluorocarbons such as $CCl_3F$, $CCl_2F_2$, $CClF_3$, and $CClF_2$-$CClF_2$; and tetraalkylsilanes such as tetramethylsilane, trimethylethylsilane, trimethylisopropylsilane, and trimethyl-n-propylsilane. In particular, the volatile material can be a hydrocarbon having a molecular weight of 120 or less. The lower limit of the molecular weight of the volatile material (hydrocarbon) is not particularly limited, and can be, for example, 50 or more. The content of the foam particle in the foam layer may be 5 mass% or more and 70 mass% or less based on the total mass of the foam layer.

The foaming initiation temperature of the foam particle can be 80°C or more and 100°C or less. When a recording medium is manufactured, usually, a coating liquid containing foam particles is coated on a substrate and is then dried to form a foam layer. In order to prevent the foam particles from foaming during drying of the coating liquid, the temperature at which the coating liquid is dried must be set lower than the foaming initiation temperature. Accordingly, the temperature at which the coating liquid is dried can be set high in a range of less than 80°C by controlling the foaming initiation temperature of the foam particles to 80°C or more. Consequently, the productivity of the recording medium can be improved. In contrast, it is not necessary to excessively raise the heating temperature when a stereoscopic image is formed by controlling the foaming initiation temperature of the foam particle to 100°C or less.

Water-insoluble thermoplastic resin

The water-insoluble thermoplastic resin can be at least one selected from the group consisting of an acrylic resin and a urethane resin. Furthermore, the thermoplastic resin can be at least one selected from the group consisting of an acrylic resin and a urethane resin not having an ester group. The mass ratio of the foam particle and the thermoplastic resin in the foam layer, foam particle : thermoplastic resin, can be from 25 : 75 to 70 : 30. The foamability of the foam particle and the binding property of the foam layer to the substrate by the thermoplastic resin can be improved by controlling the mass ratio of the foam particle and the thermoplastic resin within the above-mentioned range. The "water-insoluble thermoplastic resin" in the present specification means a thermoplastic resin of which 95 mass% or more remains without being dissolved when immersed in hot water of 80°C for 2 hours.

The thermoplastic resin can have a glass transition temperature of 10°C or less. Inhibition of foaming of the foam particles by the thermoplastic resin can be suppressed by controlling the glass transition temperature of the thermoplastic resin functioning as the binder resin within the above-mentioned range. The surfactant that is used as a dispersant for dispersing the water-insoluble thermoplastic resin in the aqueous medium and the foam layer may be any surfactant that can disperse the thermoplastic resin. For example, the thermoplastic resin may be dispersed by a non-reactive surfactant or by a reactive surfactant. In particular, the surfactant can be the reactive surfactant. The "reactive surfactant" is a compound having a hydrophilic site, a hydrophobic site, and an ethylenically unsaturated bond in the molecule. The hydrophilic site is a portion of an ionic group or an ethylene oxide structure, and the hydrophobic site is a portion other than the hydrophilic site and ethylenically unsaturated bond, such as an alkyl chain. The ethylenically unsaturated bond is derived from a group having an ethylenically unsaturated bond, and examples thereof include a (meth)acryloyl group, a vinyl group, an allyl group, an isopropenyl group, a 1-propenyl group, an allyloxy group, and a styryl group. The reactive surfactant can include, for example, an oxyalkylene group from the viewpoint of copolymerization with a monomer such as a (meth)acrylic acid alkyl ester monomer, and examples thereof include an oxyethylene group, an oxypropylene group, and an oxybutylene group. The reactive surfactant is incorporated in the water-insoluble thermoplastic resin as a unit derived from the reactive surfactant through a chemical bond with a thermoplastic resin by a reaction of the ethylenically unsaturated bond. Thus, "the thermoplastic resin is dispersed in the foam layer by a reactive surfactant" means that the thermoplastic resin contains a unit derived from the reactive surfactant and is dispersed in the foamed layer by the unit derived from the reactive surfactant. The foam height can be more increased by dispersing the water-insoluble thermoplastic resin using the reactive surfactant. Here, the "unit" means a unit structure corresponding to one monomer.

Polyvinyl alcohol

The polyvinyl alcohol is a compound that does not substantially function as a binder from the viewpoint of the amount to be added and mainly functions as a water absorption auxiliary. The polyvinyl alcohol may be contained as an additive or may be contained as a dispersant for dispersing the water-insoluble thermoplastic resin.

The polyvinyl alcohol may have a saponification degree of 80% or more and 92% or less. The foam height can be more increased by using a polyvinyl alcohol having a saponification degree within the above-mentioned range. The polyvinyl alcohol may have a polymerization degree of 700 or less. The foam height can be more increased by using a polyvinyl alcohol having a polymerization degree within the above-mentioned range. As the polyvinyl alcohol, a modified polyvinyl alcohol such as sulfone modification may be used.

The mass ratio of the content (mass%) of the polyvinyl alcohol to the content (mass%) of the thermoplastic resin in the foam layer may be 0.12 or more and 0.38 or less. When the mass ratio is within the above-mentioned range, the foam height can be more increased, and also the water resistance of the recording medium can be improved. Water-soluble resin

The foam layer may contain, in addition to the polyvinyl alcohol, a water-soluble resin having a number-average molecular weight of 100,000 or more. When the foam layer contains this water-soluble resin, not only a further sufficient foam height is obtained, but also fusion of the water-insoluble thermoplastic resin and crystallization of the polyvinyl alcohol in the foam layer can be suppressed even when a recording medium including this foam layer is stored in a high temperature environment. The number-average molecular weight of the water-soluble resin can be 100,000 or more and 400,000 or less.

In the foam layer, the mass ratio of the content (mass%) of the water-soluble resin to the total content (mass%) of the polyvinyl alcohol and the thermoplastic resin can be 0.07 or more and 0.35 or less. Fusion of the thermoplastic resin and the crystallization of the polyvinyl alcohol can be more effectively suppressed by controlling the mass ratio within the above-mentioned range. Consequently, the recording medium can form a stereoscopic image expressing a further clear feeling of unevenness and have a more excellent storage property in a high-temperature environment.

The water-soluble resin can be a quaternary ammonium salt. A stereoscopic image expressing a further clear feeling of unevenness can be formed by using a quaternary ammonium salt as the water-soluble resin, and a more excellent storage property in a high-temperature environment can be further improved. Furthermore, the water-soluble resin can be at least one selected from the group consisting of poly(diallyldimethylammonium chloride) and a copolymer of poly(diallyldimethylammonium chloride).

Ionic surfactant

The foam layer can contain an ionic surfactant having an alkyl chain having 8 or more carbon atoms. Fusion of the water-insoluble thermoplastic resin and crystallization of the polyvinyl alcohol can be suppressed by containing such an ionic surfactant in the foam layer even when the recording medium is stored in a high-temperature environment. The ionic group of the ionic surfactant may be any of cationic, anionic, and amphoteric groups. The ionic surfactant can be a non-reactive surfactant. Accordingly, the ionic surfactant may not include an ethylenically unsaturated bond.

Examples of the cationic surfactant include quaternary ammonium salt-type surfactants such as stearyltrimethylammonium chloride and lauryltrimethylammonium chloride; alkylamine-type surfactants such as stearylamine acetate; and poly(DADMAC)-type surfactants having poly(diallyldimethylammonium chloride) (poly(DADMAC)) skeleton and an alkyl group on the side chain. The cationic surfactant can have an alkyl chain having 14 or more carbon atoms. It is believed that a cationic surfactant having an alkyl chain having 14 or more carbon atoms is more strongly adsorbed with the hydrophobic portion of the polyvinyl alcohol and is hardly peeled off. The cationic surfactant may have a quaternary alkylammonium salt structure.

Examples of the anionic surfactant include sulfate-type surfactants such as sodium laurylsulfate and sodium polyoxyethylene lauryl ether sulfate; carboxylate-type surfactants such as sodium stearate; and phosphate-type surfactants such as sodium laurylphosphate. The ionic surfactant may be an anionic surfactant including a sulfonic acid group or a carboxylic acid group.

Examples of the amphoteric surfactant include alkylbetaine-type surfactants such as betaine stearyldimethylaminoacetate; fatty acid amidopropylbetaine-type surfactants such as lauric acid amidopropylbetaine and cocamidopropylbetaine; and amineoxide-type surfactants such as lauryldimethylamine N-oxide, oleyldimethylamine N-oxide, and lauric acid amidopropyldimethylamine oxide. The amphoteric surfactant may be a surfactant having an amine oxide structure.

In the foam layer, the mass ratio of the content (mass%) of the ionic surfactant to the content (mass%) of the polyvinyl alcohol can be 0.05 or more and 0.50 or less. It is possible to suppress the crystallization of the polyvinyl alcohol, suppress the fusion of the thermoplastic resin, and further improve the storage property by controlling the mass ratio within the above-mentioned range.

Other component

The foam layer can further contain components such as a pigment, an antioxidant, a dye, a surfactant other than the above-described surfactant, and a water-soluble resin other than the above-described water-soluble resin including a polyvinyl alcohol, as needed, within a range not impairing the effects of the present disclosure. Method for manufacturing recording medium

In manufacturing of the recording medium, first, a coating liquid for a foam layer containing a foam particle, a thermoplastic resin dispersed by a surfactant, and a polyvinyl alcohol is coated on a surface of a substrate to form a coat layer. Secondly, the resulting coat layer is dried to form a foam layer. Consequently, a recording medium can be obtained. In order to coat the coating liquid for a foam layer on the surface of the substrate, an existing known device such as an air knife coater, a die coater, a blade coater, a gate roll coater, a bar coater, a rod coater, a roll coater, a gravure coater, and a curtain coater can be used. Examples of the method for drying the coat layer include a method of blowing hot air. The drying conditions (temperature, air volume, time, and so on) may be appropriately set depending on the type of the substrate, the composition of the coating liquid, and so on. However, the temperature during drying must be lower than the foaming initiation temperature of the foam particle to be used.

The foam layer can be provided in 10 $g/m^2$ or more per one surface of the substrate. Foamability can be more improved by providing a foam layer of 10 $g/m^2$ or more.

A back coat layer may be provided on the surface of the substrate opposite to the surface on which the foam layer is provided. The back coat layer may be the same layer as the foam layer containing foam particles or may be a layer other than a foam layer. An adhesive layer containing an adhesive resin such as an acrylic resin or an ink-receiving layer for fixing a coloring material may be formed.

Method for manufacturing recorded matter

A recorded matter having a stereoscopic image expressing a clear feeling of unevenness and excellent water resistance can be manufactured by using the above-described recording medium. That is, the method for manufacturing a recorded matter having a stereoscopic image of the present disclosure includes a step of applying a foaming promotion liquid to the above-described recording medium for stereoscopic image formation and a step of heating the foam layer of the recording medium applied with the foaming promotion liquid to foam the foam particles to form a stereoscopic image. The foaming promotion liquid contains a foaming promotion component for reducing the foaming initiation temperatures of the foam particles and water.

Examples of the heating device for heating the foam layer of the recording medium to a desired temperature include a dryer, an oven, a heating heater, a heater, and an iron.

Foaming promotion liquid

The foaming promotion liquid is a liquid composition containing a foaming promotion component for reducing the foaming initiation temperature of the foam particles and water.

Foaming promotion component

The foaming promotion liquid contains a foaming promotion component that reduces the foaming initiation temperature of the microcapsule-type foam particle. The thermoplastic resin contained in the shell layer of the foam particle can be softened by applying the foaming promotion liquid containing the foaming promotion component to the foam layer of the recording medium by a method such as ejection by an ink jet system or application. It is inferred that as a result, the foaming initiation temperature and maximum foaming temperature of the foam particles can be shifted to the low temperature side.

The foaming promotion component may be any component that can soften the thermoplastic resin constituting the shell layer of the foam particle and can be appropriately selected and used depending on the type of the resin and so on. The foaming promotion component can be a compound not having a hydroxyl group. The boiling point of the compound not having a hydroxyl group that is used as the foaming promotion component is higher than the temperature for heating the foam layer. Accordingly, the compound not having a hydroxyl group is hardly vaporized even when the foam layer is heated and can contribute to softening of the resin constituting the shell layer. In the foaming promotion liquid, the content (mass%) of the compound not having a hydroxyl group that is the foaming promotion component may be 10 mass% or more and 70 mass% or less based on the total mass of the foaming promotion liquid.

The absolute value of the difference ($|SP_1 - SP_2|$) between the Hildebrand solubility parameter ($SP_1$) of the resin forming the shell layer of the foam particle (microcapsule) and the Hildebrand solubility parameter ($SP_2$) of the foaming promotion component can be 3.5 $(cal/cm^3)^{1/2}$ or less. When the absolute value of the difference in the Hildebrand solubility parameter is within the above-mentioned numerical value range, the foamability of the region in the foam layer where the foaming promotion liquid containing the foaming promotion component is applied can be more improved. When the foam particle is composed of a shell layer formed of polyacrylonitrile and a volatile material encapsulated in the shell layer, the components shown below can be used as the foaming promotion component. That is, as the foaming promotion component, at least one selected from the group consisting of 2-pyrrolidone, dimethyl sulfoxide, N,N-dimethylformamide, and N-methyl-2-pyrrolidone may be used.

The absolute value of the difference ($|HSP_1 - HSP_2|$) between the Hansen solubility parameter ($HSP_1$) of the resin forming the shell layer of the foam particle (microcapsule) and the Hansen solubility parameter ($HSP_2$) of the foaming promotion component can be 20 $MPa^{1/2}$ or less. When the absolute value of the difference in the Hansen solubility parameter is within the above-mentioned numerical value range, the foamability of the region in the foam layer where the foaming promotion liquid containing the foaming promotion component is applied can be more improved.

The Hildebrand solubility parameters (SP values) of the resin forming the shell layer and the foaming promotion component are both calculated values. The Hansen solubility parameters (HSP values) of the resin forming the shell layer and the foaming promotion component are both measured values that are measured and calculated by dynamic light scattering.

Other component

When the foaming promotion component is a liquid at a normal temperature (25°C), the foaming promotion component itself may be used as the foaming promotion liquid. The foaming promotion liquid may further contain a component (other component) in addition to the foaming promotion component. For example, in order to improve the ejection stability of the foaming promotion liquid, a liquid component such as solvent may be further contained. As the solvent, water and various water-soluble organic solvents can be used. In particular, the foaming promotion liquid can be an aqueous foaming promotion liquid containing water. As the water, deionized water (ion exchanged water) may be used. The content of water in the foaming promotion liquid is preferably 30 mass% or more and 90 mass% or less, further preferably 40 mass% or more and 90 mass% or less, and particularly preferably 50 mass% or more and 90 mass% or less based on the total mass of the foaming promotion liquid. Examples of the water-soluble organic solvent include alcohols, glycols, glycol ethers, and nitrogen-containing compounds.

As the component other than the liquid components, a water-soluble organic compound that is a solid at 25°C, such as urea and its derivative, trimethylolpropane, and trimethylolethane, can be used. Furthermore, the foaming promotion liquid may contain various additives such as a pH adjuster, an antifoaming agent, a rust inhibitor, a preservative, an antifungal agent, an antioxidant, a reducing inhibitor, and a chelating agent as needed.

Apparatus for manufacturing recorded matter having stereoscopic image

The apparatus for manufacturing a recorded matter having a stereoscopic image (hereinafter, also simply referred to as "recorded matter manufacturing apparatus" or "manufacturing apparatus") includes a foaming promotion liquid application device for applying a foaming promotion liquid to a recording medium and a heating device for heating the foam layer of the recording medium applied with the foaming promotion liquid. The recording medium includes a substrate and a foam layer provided on the substrate and containing a microcapsule-type foam particle that foams by heat, a water-insoluble thermoplastic resin dispersed by a surfactant, and a polyvinyl alcohol which is a water-soluble resin. The foaming promotion liquid contains a foaming promotion compound that reduces the foaming initiation temperature of the foam particles and water. The heating device is a device that heats the foam layer of the recording medium to foam the foam particles and thereby forms a stereoscopic image. This recorded matter manufacturing apparatus can be suitably used in the above-described method for manufacturing a recorded matter.

The recorded matter manufacturing apparatus can also include an ink accommodating unit containing the ink and an ink application device for ejecting the ink from the ink jet recording head to record an image on the recording medium. The recorded matter manufacturing apparatus can also include a foaming promotion liquid accommodating unit containing the foaming promotion liquid. Furthermore, the recorded matter manufacturing apparatus can also include a conveying device for conveying the recording medium.

Fig. 2 is a schematic view illustrating a schematic configuration of an example of the apparatus for manufacturing a recorded matter having a stereoscopic image. The recorded matter manufacturing apparatus 20 shown in Fig. 2 includes a foaming promotion liquid application device 22, a heating device 23, an ink application device 24, and a conveying device 25. The recording medium 21 is conveyed in the direction of the arrow A in Fig. 2 by the conveying device 25, which is a conveying device for conveying the recording medium 21. The conveying device 25 includes a conveyance belt 26, which is an endless belt, and two rollers 27 and 28 holding the conveyance belt 26. The rollers 27 and 28 are rotationally driven to convey the recording medium 21 in the arrow A direction. The conveying device 25 may further include a platen 29 restricting the vertical displacement of the conveyance belt 26.

The foaming promotion liquid application device 22 which is a foaming promotion application device includes a recording head of an ink jet system for ejecting a foaming promotion liquid. The foaming promotion liquid ejected from the recording head by the ink jet system is applied to the recording medium 21 conveyed by the conveying device 25. The heating device 23 is a heating device that heats the foam layer of the recording medium 21 applied with the foaming promotion liquid. The heating device 23 may be any heating device that can heat the foam particles in the foam layer to a desired temperature. Examples of the heating device 23 include a dryer, an oven, a heater, and an iron.

The ink application device 24 which is an ink application device includes a recording head of an ink jet system that ejects an ink. The ink ejected from the recording head by the ink jet system is applied to the recording medium 21 in which the foam particles in the foam layer have been foamed. The ink application device 24 may be disposed either upstream or downstream of the foaming promotion liquid application device 22 with respect to the direction A which is the conveyance direction of the recording medium 21 and may be disposed in either upstream or downstream of the heating device 23. Fig. 2 shows a configuration when the ink application device 24 is disposed downstream of the foaming promotion liquid application device 22 with respect to the conveyance direction (direction A) of the recording medium 21 and downstream of the heating device 23.

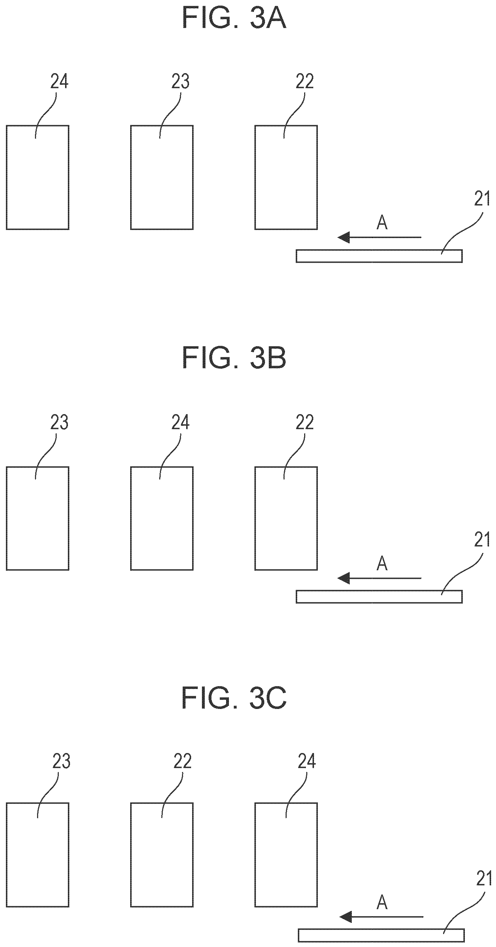

Figs. 3A to 3C are schematic views of illustrating specific examples of arrangement of the foaming promotion liquid application device 22, the heating device 23, and the ink application device 24 in an apparatus for manufacturing a recorded matter having a stereoscopic image. Fig. 3A shows a configuration in which the ink application device 24 is disposed downstream of the foaming promotion liquid application device 22 with respect to the conveyance direction A of the recording medium 21 and downstream of the heating device 23. Fig. 3B shows a configuration in which the ink application device 24 is disposed downstream of the foaming promotion liquid application device 22 with respect to the conveyance direction A of the recording medium 21 and upstream of the heating device 23. Fig. 3C shows a configuration in which the ink application device 24 is disposed upstream of the foaming promotion liquid application device 22 with respect to the conveyance direction A of the recording medium 21 and upstream of the heating device 23.

According to one aspect of the present disclosure, it is possible to provide a recording medium for stereoscopic image formation, allowing to form a stereoscopic image expressing a clear feeling of unevenness by high-speed printing at a low temperature and having excellent water resistance. According to another aspect of the present disclosure, it is possible to provide a method for manufacturing a recorded matter having a stereoscopic image expressing a clear feeling of unevenness and having excellent water resistance.

EXAMPLES

The present disclosure will now be described in more detail with reference to Examples and Comparative Examples, but is not limited to the following Examples in any way, as long as it does not beyond the gist of the present disclosure. "Parts" and "%" regarding to amounts of components are based on mass unless otherwise specified. Provision of foam particle

As a foam particle, tradename "Expancel 007-40" (manufactured by Japan Fillite Co., Ltd.) was provided. This foam particle is a microcapsule-type foam particle including a shell layer formed from polyacrylonitrile. The foaming initiation temperature of the provided foam particle was measured using a thermomechanical analysis apparatus (TMA) (tradename: TMA 2940, manufactured by TA instruments) by the following procedure. In an aluminum container with a diameter of 7 mm and a thickness of 1 mm, 25 µg of a sample was placed and was applied with a load of 0.1 N from above. In this state, the sample was heated from 60°C to 200°C at a temperature raising rate of 5°C/min, and the displacement in the perpendicular direction of the measurement terminal was measured. The temperature at which the displacement starts was defined as "foaming initiation temperature". As a result, the foaming initiation temperature was "91°C".

Provision of water-insoluble thermoplastic resins J1 to J5

Thermoplastic resin J1

Methyl methacrylate (MMA, 83 parts), n-butyl acrylate (n-BA, 167 parts), acrylic acid (AA, 5 parts), ion exchanged water (112.5 parts), a reactive surfactant (13 parts), and ammonium persulfate (0.3 parts) were placed in a flask equipped with a stirrer. As the reactive surfactant, polyoxyethylene-1-(allyloxymethyl) alkyl ether (tradename "ADEKA REASOAP ER-10", manufactured by ADEKA Corporation, concentration: 30%) was used. The contents were stirred using the stirrer at 600 rpm to obtain a first emulsion. The above-mentioned reactive surfactant (3.3 parts), ammonium persulfate (0.075 parts), the first emulsion (19.0 parts), and ion exchanged water (162.5 parts) were put in a flask equipped with a stirrer, a cooling tube, a dropping pump, and a temperature control device. After nitrogen substitution, the mixture was heated to 80°C for 30 minutes to obtain a second emulsion. The first emulsion (361.8 parts) was dropwise added to the second emulsion over 3 hours, and the mixture was then heated for 1 hour for maturing to obtain a third emulsion. The third emulsion was cooled to 30°C or less, and an ammonium aqueous solution was then added thereto for neutralization, followed by dilution with ion exchanged water to obtain an emulsion (solid content: 43%) of a thermoplastic resin J1, which is an acrylic resin.

Thermoplastic resins J2 and J3

An emulsion (solid content: 43%) of a thermoplastic resin J2, which is an acrylic resin, was obtained as in the case of the above-described thermoplastic resin J1 except that MMA (128 parts) and n-BA (122 parts) were used. In addition, an emulsion (solid content: 43%) of a thermoplastic resin J3, which is an acrylic resin, was obtained as in the case of the above-described thermoplastic resin J1 except that MMA (139 parts) and n-BA (111 parts) were used.

Thermoplastic resin J4

An emulsion (solid content: 43%) of a thermoplastic resin J4, which is an acrylic resin, was obtained as in the case of the above-described emulsion of the thermoplastic resin J1 except that a non-reactive surfactant was used instead of the reactive surfactant. As the non-reactive surfactant, a 30% aqueous solution of polyoxyethylene alkyl ether (tradename "ELEMINOL 200L", manufactured by Sanyo Chemical Industries, Ltd., concentration: 100%) was used. The non-reactive surfactant is also nonionic. Thermoplastic resin J5

Polyvinyl alcohol (tradename "Poval 5-88", manufactured by Kuraray Co., Ltd.) was dissolved in ion exchanged water to obtain an aqueous solution of polyvinyl alcohol P1 (polyvinyl alcohol concentration: 20%) shown in Table 2. MMA (83 parts), n-BA (167 parts), AA (5 parts), ion exchanged water (11.8 parts), a polyvinyl alcohol P1 aqueous solution (127.5 parts), and ammonium persulfate (0.3 parts) were put in a flask equipped with a stirrer and were stirred at 600 rpm to obtain a first emulsion. The polyvinyl alcohol P1 aqueous solution (31.8 parts), ammonium persulfate (0.075 parts), the first emulsion (19.7 parts), and ion exchanged water (162.5 parts) were put in a flask equipped with a stirrer, a cooling tube, a dropping pump, and a temperature control device. After nitrogen substitution, the mixture was heated to 80°C for 30 minutes to obtain a second emulsion. The first emulsion (374.9 parts) was dropwise added to the second emulsion over 3 hours, and the mixture was then heated for 1 hour for maturing to obtain a third emulsion. The third emulsion was cooled to 30°C or less, and an ammonium aqueous solution was then added thereto for neutralization, followed by dilution with ion exchanged water to obtain an emulsion (solid content: 43%) of a thermoplastic resin J5, which is an acrylic resin, including the polyvinyl alcohol P1. Measurement of glass transition temperature

The glass transition temperatures of the thermoplastic resins J1 to J5 were measured using a differential scanning calorimeter (tradename "DSC2500", manufactured by TA instruments) according to the following procedure. An emulsion of a thermoplastic resin was dried and solidified to obtain a sample, and about 2 mg of the resulting sample was weighed on an aluminum pan. The aluminum pan was set in a DSC measurement holder, and the heat absorption peak of a chart obtained at a temperature raising rate of 5°C/min was read to obtain a glass transition temperature (Tg (°C)) value. The obtained glass transition temperature (Tg (°C)) value is shown in Table 1.

Measurement of average particle diameter (D50)

The average particle diameters (D50) of the thermoplastic resins J1 to J5 in emulsions were measured using a particle size analyzer (tradename "NANOTRAC WAVE", manufactured by MicrotracBEL Corporation) adopting dynamic light scattering according to the following procedure. The emulsions were each diluted with pure water to a measurement concentration range to prepare each sample. The average particle diameter (volume-based accumulated 50% particle diameter (median diameter: D50)) of the thermoplastic resin in each emulsion was measured according to the measurement conditions shown below.
The results are shown in Table 1.

Measurement conditions

SetZero: 30 seconds;

The number of times of measurement: 3 times;

Measurement time: 180 seconds;

Shape: true sphere; and

Refractive index: 1.59.

Table 1

| Thermoplastic resin | Type of resin | Type of dispersant | Glass transition temperature Tg (°C) | Average particle diameter D50 (nm) |
|---|---|---|---|---|
| J1 | Acrylic resin | Reactive surfactant | -10 | 400 |
| J2 | Acrylic resin | Reactive surfactant | 10 | 380 |
| J3 | Acrylic resin | Reactive surfactant | 15 | 380 |
| J4 | Acrylic resin | Non-reactive surfactant | -10 | 400 |
| J5 | Acrylic resin | Polyvinyl alcohol | -10 | 400 |

Provision of polyvinyl alcohol

Polyvinyl alcohols P1 to P10 shown in Table 2 were each dissolved in ion exchanged water to obtain aqueous solutions of polyvinyl alcohols P1 to P10 with a polyvinyl alcohol concentration of 20%.

Table 2

| Polyvinyl alcohol | Product name | Manufacturer | Saponificati on degree (%) | Polymerization degree |
|---|---|---|---|---|
| P1 | Poval 5-88 | Kuraray | 88 | 500 |
| P2 | Poval 5-74 | Kuraray | 74 | 500 |
| P3 | Poval 7-92 | Kuraray | 92 | 600 |
| P4 | Poval 3-88 | Kuraray | 88 | 300 |
| P5 | Poval 9-88 | Kuraray | 88 | 1,000 |
| P6 | Poval 5-98 | Kuraray | 98 | 500 |
| P7 | Poval 95-88 | Kuraray | 88 | 3,500 |
| P8 | JMR20M | JAPAN VAM & POVAL | 65 | 400 |

(continued)

| Polyvinyl alcohol | Product name | Manufacturer | Saponificati on degree (%) | Polymerization degree |
|---|---|---|---|---|
| P9 | GOHSENX WO-320R | Mitsubishi Chemical | 88 | 700 |
| P10 | GOHSENOL GM-14R | Mitsubishi Chemical | 88 | 1,500 |

Provision of surfactant

Surfactants S1 to S9 shown in Table 3 ware provided.

Table 3

| Surfactant | Product Name | Ionicity | Number of carbon atoms in alkyl chain |
|---|---|---|---|
| S1 | ZV-63A (manufactured by SENKA Corp.) | Cationic | 16 |
| S2 | EMAL 10G (manufactured by Kao Corp.) | Anionic | 12 |
| S3 | SOFTAZOLINE LAO (manufactured by Kawaken Fine Chemicals Co., Ltd.) | Amphoteric | 11 |
| S4 | Tetradecyltrimethylammonium bromide (manufactured by Tokyo Chemical Industry Co., Ltd.) | Cationic | 14 |
| S5 | ZV-59A (manufactured by SENKA Corp.) | Cationic | 8 |
| S6 | ACETAMIN 24 (manufactured by Kao Corp.) | Cationic | 16 |
| S7 | NIKKOL SLP-N (manufactured by Nikko Chemicals Co., Ltd.) | Anionic | 11 |
| S8 | Sodium octanoate (manufactured by Kishida Chemical Co., Ltd.) | Anionic | 7 |
| S9 | EMULGEN 430 (manufactured by Kao Corp.) | Nonionic | 12 |

Provision of water-soluble resin

Water-soluble resin N1 to N6 shown in Table 4 were provided. The meanings of the abbreviations in Table 4 are as follows:

DADMAC: diallyldimethylammoinium chloride;

Aam: acrylamide;

DMA: dimethylamine;

NH3: ammonia; and

ECH: epichlorohydrin.

Table 4

| Water-soluble resin | Product Name | Monomer composition | Molecular weight |
|---|---|---|---|
| N1 | PAS-J-81 (manufactured by Nittobo Medical Co., Ltd.) | DADMAC/Aam | 180,000 |

(continued)

| Water-soluble resin | Product Name | Monomer composition | Molecular weight |
|---|---|---|---|
| N2 | Unisense FPA-1001L (manufactured by SENKA Corp.) | DADMAC | 200,000 to 300,000 |
| N3 | Unisense FPA-1000L (manufactured by SENKA Corp.) | DADMAC | 100,000 to 130,000 |
| N4 | Unisense FPA-102L (manufactured by SENKA Corp.) | DADMAC | 70,000 |
| N5 | Unisense KHE-1000L (manufactured by SENKA Corp.) | DMA/NH3/ECH | 200,000 to 400,000 |
| N6 | PAA-HCl-10L (manufactured by Nittobo Medical Co., Ltd.) | Allylamine hydrochloride (primary amine) | 150,000 |

Manufacturing of recording medium

Recording medium 1

As a substrate, polypropylene synthetic paper (tradename "New Yupo FGS 110", manufactured by YUPO Corporation) was provided. Foam particles (50 parts), an emulsion of the thermoplastic resin J1 (80 parts, solid content), an aqueous solution of polyvinyl alcohol P1 (16 parts, solid content), a surfactant S1 (4.8 parts, solid content), and a water-soluble resin N1 (12 parts, solid content) were added to ion exchanged water, followed by sufficient stirring to obtain a coating liquid for a foam layer (solid content: 35%). The obtained coating liquid was coated on the substrate and was then dried in an oven of 80°C for 10 minutes to form a foam layer with a thickness of 40 μm to obtain a recording medium 1.

Recording media 2 to 20

Recording media 2 to 43 were obtained as in the above-described recording medium 1 except that the compositions were as shown in Table 5. The recording medium 35 was manufactured by the same method as in the recording medium 1 except that an emulsion (90 parts) of a predetermined thermoplastic resin (solid content of the sum of thermoplastic resin and polyvinyl alcohol) was used and that 6 parts (solid content) of an aqueous solution of the polyvinyl alcohol P1 was used. As the emulsion of a predetermined thermoplastic resin, an emulsion of the thermoplastic resin J5 was used. The recording medium 36 was manufactured by the same method as in the recording medium 1 except that an emulsion (90 parts) of a predetermined thermoplastic resin (solid content of the sum of thermoplastic resin and polyvinyl alcohol) was used and that an aqueous solution of the polyvinyl alcohol P1 was not used. As the emulsion of a predetermined thermoplastic resin, an emulsion of the thermoplastic resin J5 was used. The foam layer of the recording medium 35 contained 80 parts of the thermoplastic resin J5 and 16 parts of the polyvinyl alcohol P1. The foam layer of the recording medium 36 contained 80 parts of the thermoplastic resin J5 and 10 parts of the polyvinyl alcohol P1.

Table 5

| Recording medium | Foam particle Amount (part) | Thermoplastic resin Type | Thermoplastic resin Amount A (part) | Polyvinyl alcohol in emulsion of thermoplastic resin Type | Polyvinyl alcohol in emulsion of thermoplastic resin Amount (part) | Polyvinyl alcohol in polyvinyl alcohol aqueous solution Type | Polyvinyl alcohol in polyvinyl alcohol aqueous solution Amount (part) | Total of polyvinyl alcohol Type | Total of polyvinyl alcohol Amount B (part) | Ionic surfactant Type | Ionic surfactant Amount C (part) | Water-soluble resin other than polyvinyl alcohol Type | Water-soluble resin other than polyvinyl alcohol Amount D (part) | Value (ratio) of B/A | Value (ratio) of C/B | Value (ratio) of D/(A+B) |
|---|---|---|---|---|---|---|---|---|---|---|---|---|---|---|---|---|
| 1 | 50 | J1 | 80 | - | 0 | P1 | 16 | P1 | 16 | S1 | 4.8 | N1 | 12 | 0.20 | 0.30 | 0.125 |
| 2 | 50 | J1 | 80 | - | 0 | P2 | 16 | P2 | 16 | S1 | 4.8 | N1 | 12 | 0.20 | 0.30 | 0.125 |
| 3 | 50 | J1 | 80 | - | 0 | P3 | 16 | P3 | 16 | S1 | 4.8 | N1 | 12 | 0.20 | 0.30 | 0.125 |
| 4 | 50 | J1 | 80 | - | 0 | P4 | 16 | P4 | 16 | S1 | 4.8 | N1 | 12 | 0.20 | 0.30 | 0.125 |
| 5 | 50 | J1 | 80 | - | 0 | P9 | 16 | P9 | 16 | S1 | 4.8 | N1 | 12 | 0.20 | 0.30 | 0.125 |
| 6 | 50 | J1 | 80 | - | 0 | P5 | 16 | P5 | 16 | S1 | 4.8 | N1 | 12 | 0.20 | 0.30 | 0.125 |
| 7 | 50 | J1 | 80 | - | 0 | P1 | 8 | P1 | 8 | S1 | 4.8 | N1 | 12 | 0.10 | 0.30 | 0.125 |
| 8 | 50 | J1 | 80 | - | 0 | P1 | 32 | P1 | 32 | S1 | 4.8 | N1 | 12 | 0.40 | 0.30 | 0.125 |
| 9 | 50 | J2 | 80 | - | 0 | P1 | 16 | P1 | 16 | S1 | 4.8 | N1 | 12 | 0.20 | 0.30 | 0.125 |
| 10 | 50 | J3 | 80 | - | 0 | P1 | 16 | P1 | 16 | S1 | 4.8 | N1 | 12 | 0.20 | 0.30 | 0.125 |
| 11 | 50 | J4 | 80 | - | 0 | P1 | 16 | P1 | 16 | S1 | 4.8 | N1 | 12 | 0.20 | 0.30 | 0.125 |
| 12 | 50 | J1 | 80 | - | 0 | P1 | 16 | P1 | 16 | S2 | 4.8 | N1 | 12 | 0.20 | 0.30 | 0.125 |
| 13 | 50 | J1 | 80 | - | 0 | P1 | 16 | P1 | 16 | S3 | 4.8 | N1 | 12 | 0.20 | 0.30 | 0.125 |
| 14 | 50 | J1 | 80 | - | 0 | P1 | 16 | P1 | 16 | S4 | 4.8 | N1 | 12 | 0.20 | 0.30 | 0.125 |
| 15 | 50 | J1 | 80 | - | 0 | P1 | 16 | P1 | 16 | S5 | 4.8 | N1 | 12 | 0.20 | 0.30 | 0.125 |
| 16 | 50 | J1 | 80 | - | 0 | P1 | 16 | P1 | 16 | S6 | 4.8 | N1 | 12 | 0.20 | 0.30 | 0.125 |
| 17 | 50 | J1 | 80 | - | 0 | P1 | 16 | P1 | 16 | S1 | 0.8 | N1 | 12 | 0.20 | 0.05 | 0.125 |
| 18 | 50 | J1 | 80 | - | 0 | P1 | 16 | P1 | 16 | S1 | 0.64 | N1 | 12 | 0.20 | 0.04 | 0.125 |
| 19 | 50 | J1 | 80 | - | 0 | P1 | 16 | P1 | 16 | S1 | 8 | N1 | 12 | 0.20 | 0.50 | 0.125 |
| 20 | 50 | J1 | 80 | - | 0 | P1 | 16 | P1 | 16 | S1 | 8.16 | N1 | 12 | 0.20 | 0.51 | 0.125 |
| 21 | 50 | J1 | 80 | - | 0 | P1 | 16 | P1 | 16 | S7 | 4.8 | N1 | 12 | 0.20 | 0.30 | 0.125 |
| 22 | 50 | J1 | 80 | - | 0 | P1 | 16 | P1 | 16 | S8 | 4.8 | N1 | 12 | 0.20 | 0.30 | 0.125 |
| 23 | 50 | J1 | 80 | - | 0 | P1 | 16 | P1 | 16 | S9 | 4.8 | N1 | 12 | 0.20 | 0.30 | 0.125 |
| 24 | 50 | J1 | 80 | - | 0 | P1 | 16 | P1 | 16 | - | 0 | N1 | 12 | 0.20 | 0.00 | 0.125 |
| 25 | 50 | J1 | 80 | - | 0 | P1 | 16 | P1 | 16 | S1 | 4.8 | N2 | 12 | 0.20 | 0.30 | 0.125 |
| 26 | 50 | J1 | 80 | - | 0 | P1 | 16 | P1 | 16 | S1 | 4.8 | N3 | 12 | 0.20 | 0.30 | 0.125 |
| 27 | 50 | J1 | 80 | - | 0 | P1 | 16 | P1 | 16 | S1 | 4.8 | N4 | 12 | 0.20 | 0.30 | 0.125 |
| 28 | 50 | J1 | 80 | - | 0 | P1 | 16 | P1 | 16 | S1 | 4.8 | N1 | 6.72 | 0.20 | 0.30 | 0.07 |
| 29 | 50 | J1 | 80 | - | 0 | P1 | 16 | P1 | 16 | S1 | 4.8 | N1 | 5.76 | 0.20 | 0.30 | 0.06 |
| 30 | 50 | J1 | 80 | - | 0 | P1 | 16 | P1 | 16 | S1 | 4.8 | N1 | 33.6 | 0.20 | 0.30 | 0.35 |
| 31 | 50 | J1 | 80 | - | 0 | P1 | 16 | P1 | 16 | S1 | 4.8 | N1 | 34.56 | 0.20 | 0.30 | 0.36 |
| 32 | 50 | J1 | 80 | - | 0 | P1 | 16 | P1 | 16 | S1 | 4.8 | N5 | 12 | 0.20 | 0.30 | 0.125 |
| 33 | 50 | J1 | 80 | - | 0 | P1 | 16 | P1 | 16 | S1 | 4.8 | N6 | 12 | 0.20 | 0.30 | 0.125 |
| 34 | 50 | J1 | 80 | - | 0 | P1 | 16 | P1 | 16 | S1 | 4.8 | - | 0 | 0.20 | 0.30 | 0.00 |
| 35 | 50 | J5 | 80 | P1 | 10 | P1 | 6 | P1 | 16 | S1 | 4.8 | N1 | 12 | 0.20 | 0.30 | 0.125 |
| 36 | 50 | J5 | 80 | P1 | 10 | - | 0 | P1 | 10 | S1 | 4.8 | N1 | 12 | 0.13 | 0.48 | 0.133 |
| 37 | 50 | J1 | 80 | - | 0 | - | 0 | - | 0 | S1 | 4.8 | N1 | 12 | 0.00 | - | 0.15 |
| 38 | 50 | J1 | 80 | - | 0 | P6 | 16 | P6 | 16 | S1 | 4.8 | N1 | 12 | 0.20 | 0.30 | 0.125 |
| 39 | 50 | J1 | 80 | - | 0 | P8 | 16 | P8 | 16 | S1 | 4.8 | N1 | 12 | 0.20 | 0.30 | 0.125 |
| 40 | 50 | J1 | 80 | - | 0 | P10 | 16 | P10 | 16 | S1 | 4.8 | N1 | 12 | 0.20 | 0.30 | 0.125 |
| 41 | 50 | J1 | 80 | - | 0 | P7 | 16 | P7 | 16 | S1 | 4.8 | N1 | 12 | 0.20 | 0.30 | 0.125 |
| 42 | 50 | J1 | 80 | - | 0 | P1 | 7.2 | P1 | 7.2 | S1 | 2.16 | N1 | 12 | 0.09 | 0.30 | 0.138 |
| 43 | 50 | J1 | 80 | - | 0 | P1 | 32.8 | P1 | 32.8 | S1 | 9.84 | N1 | 12 | 0.41 | 0.30 | 0.106 |

Preparation of foaming promotion liquid

Dimethyl sulfoxide (35 parts), a nonionic surfactant (0.5 parts, tradename "Acetylenol E60", manufactured by Kawaken Fine Chemicals Co., Ltd.), and ion exchanged water (64.5 parts) were mixed. After sufficient stirring, pressurized filtration with a filter of a pore size of 1.2 μm was performed to obtain a foaming promotion liquid.

Manufacturing of recorded matter

A cartridge was filled with the foaming promotion liquid and was mounted on an ink jet recording apparatus (tradename "PIXUS MG 3630", manufactured by CANON KABUSHIKI KAISHA). In this Example, a recording duty of an image recorded under conditions of applying two droplets of approximately 11.2 ng each to a unit region of 1/600 inch × 1/600 inch is defined as 100%.

A recording medium was heated previously to a paper surface temperature of 40°C with the above-mentioned ink jet recording apparatus. Subsequently, the foaming promotion liquid was applied to the foam layer of the recording medium at 21 ng/(600 dpi × 600 dpi). Five seconds after the application of the foaming promotion liquid, the foam layer applied with the foaming promotion liquid was heated to a surface temperature of 93°C for 15 seconds using a hot air gun (tradename "HL2010E1", manufactured by Sakaguchi Electric Heaters Co., Ltd.). Consequently, the foam particles in the foam layer were foamed to form a stereoscopic image. Thus, recorded matters 1 to 43 were obtained.

Evaluation

Foam height

The height (foam height) of the foamed area was measured based on the height of the unfoamed area of the surface of the obtained recorded matter using a digital micrometer (tradename "M-30", manufactured by Sony Corporation). The foam height of the stereoscopic image was evaluated according to the evaluation criteria shown below. The results are shown in Table 6.

AA: a foam height of 270 μm or more;
A: a foam height of 230 μm or more and less than 270 μm;
B: a foam height of 160 μm or more and less than 230 μm; and
C: a foam height of less than 160 μm.

Water resistance

Pure water (40 μL) was dropwise added to the unfoamed area of the surface of the obtained recorded matter and was wiped off after 10 seconds with dry cloth. The state of the surface of the recorded matter after wiping was observed to evaluate the water resistance of the recording medium according to the evaluation criteria shown below. The results are shown in Table 6.

A: almost no change was observed in the wiped area, compared to the area where pure water was not dropped;
B: a small change was observed in the wiped area, compared to the area where pure water was not dropped; and
C: the foam layer in the wiped area came off.

Storage property

The recording medium was stored in an oven of 60°C for 2 days. Recorded matter was manufactured as in the above-described "Manufacturing of recorded matter" using the recording medium after the storage. The height (foam height) of the foamed area was measured based on the height of the unfoamed area of the surface of the obtained recorded matter using a digital micrometer (tradename "M-30", manufactured by Sony Corporation). The foam height of the recorded matter manufactured using the recording medium before the storage was defined as "foam height 1 (μm), and the foam height of the recorded matter manufactured using the recording medium after the storage was defined as "foam height 2 (μm)". The "height reduction rate (%) after storage" was calculated by the expression (1) shown below to evaluate the storage property of the recording medium according to the evaluation criteria shown below. The results are shown in Table 6.

$$\text{Height reduction rate (\%) after storage} = [(H1 - H2)/H1] \times 100 \quad (1)$$

(in the expression (1), H1 indicates the foam height 1, and H2 indicates the foam height 2).

AA: the height reduction rate after storage was less than 30%;
A: the height reduction rate after storage was 30% or more and less than 50%; and
B: the height reduction rate after storage was 50% or more.

Table 6

|  | Recording medium | Recorded matter | Foam height | Water resistance | Storage property |
|---|---|---|---|---|---|
| Example 1 | 1 | 1 | AA | A | AA |
| Example 2 | 2 | 2 | A | A | AA |
| Example 3 | 3 | 3 | B | A | AA |
| Example 4 | 4 | 4 | AA | A | AA |
| Example 5 | 5 | 5 | AA | A | AA |
| Example 6 | 6 | 6 | B | A | AA |
| Example 7 | 7 | 7 | B | A | AA |
| Example 8 | 8 | 8 | AA | B | A |
| Example 9 | 9 | 9 | AA | A | AA |
| Example 10 | 10 | 10 | A | A | AA |
| Example 11 | 11 | 11 | A | A | A |
| Example 12 | 12 | 12 | AA | A | AA |
| Example 13 | 13 | 13 | AA | A | AA |
| Example 14 | 14 | 14 | AA | A | AA |
| Example 15 | 15 | 15 | A | A | A |
| Example 16 | 16 | 16 | A | A | A |
| Example 17 | 17 | 17 | AA | A | AA |
| Example 18 | 18 | 18 | AA | A | A |
| Example 19 | 19 | 19 | AA | A | AA |
| Example 20 | 20 | 20 | A | B | A |
| Example 21 | 21 | 21 | A | A | A |
| Example 22 | 22 | 22 | A | B | B |
| Example 23 | 23 | 23 | A | B | B |
| Example 24 | 24 | 24 | B | B | B |
| Example 25 | 25 | 25 | AA | A | AA |
| Example 26 | 26 | 26 | AA | A | AA |
| Example 27 | 27 | 27 | AA | B | B |
| Example 28 | 28 | 28 | AA | A | AA |
| Example 29 | 29 | 29 | A | A | A |
| Example 30 | 30 | 30 | AA | A | AA |
| Example 31 | 31 | 31 | A | B | AA |

(continued)

|  | Recording medium | Recorded matter | Foam height | Water resistance | Storage property |
|---|---|---|---|---|---|
| Example 32 | 32 | 32 | A | A | AA |
| Example 33 | 33 | 33 | A | B | AA |
| Example 34 | 34 | 34 | B | A | B |
| Comparative Example 1 | 35 | 35 | AA | C | A |
| Comparative Example 2 | 36 | 36 | AA | C | B |
| Comparative Example 3 | 37 | 37 | C | A | B |
| Comparative Example 4 | 38 | 38 | C | A | A |
| Comparative Example 5 | 39 | 39 | C | A | AA |
| Comparative Example 6 | 40 | 40 | C | A | A |
| Comparative Example 7 | 41 | 41 | C | A | A |
| Comparative Example 8 | 42 | 42 | C | A | AA |
| Comparative Example 9 | 43 | 43 | A | C | A |

While the present disclosure has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A recording medium (10) for stereoscopic image formation, comprising:

   a substrate (11); and
   a foam layer (12) provided on the substrate (11) and containing a microcapsule-type foam particle (13) that foams by heat, a water-insoluble thermoplastic resin (14), and a polyvinyl alcohol (15), wherein
   the thermoplastic resin (14) is dispersed in the foam layer (12) by a surfactant,
   the polyvinyl alcohol (15) has a saponification degree of 70% or more and 92% or less,
   the polyvinyl alcohol (15) has a polymerization degree of 1,000 or less, and
   a mass ratio of a content (mass%) of the polyvinyl alcohol (15) to a content (mass%) of the thermoplastic resin (14) in the foam layer (12) is 0.10 or more and 0.40 or less.

2. The recording medium (10) according to Claim 1, wherein the polyvinyl alcohol (15) has a saponification degree of 80% or more and 92% or less.

3. The recording medium (10) according to Claim 1 or 2, wherein the polyvinyl alcohol (15) has a polymerization degree of 700 or less.

4. The recording medium (10) according to any one of Claims 1 to 3, wherein the thermoplastic resin (14) is at least one selected from the group consisting of an acrylic resin and a urethane resin.

5. The recording medium (10) according to any one of Claims 1 to 4, wherein the thermoplastic resin (14) has a glass transition temperature of 10°C or less.

6. The recording medium (10) according to any one of Claims 1 to 5, wherein the surfactant is a reactive surfactant.

7. The recording medium (10) according to any one of Claims 1 to 6, wherein the foam layer (12) contains an ionic surfactant including an alkyl chain having 8 or more carbon atoms.

8. The recording medium (10) according to Claim 7, wherein the ionic surfactant is a cationic surfactant.

9. The recording medium (10) according to Claim 8, wherein the cationic surfactant includes an alkyl chain having 14 or more carbon atoms.

10. The recording medium (10) according to Claim 8 or 9, wherein the cationic surfactant has a quaternary alkylammonium salt structure.

11. The recording medium (10) according to Claim 7, wherein the ionic surfactant is an anionic surfactant including a sulfonic acid group or a carboxylic acid group.

12. The recording medium (10) according to Claim 7, wherein the ionic surfactant is an amphoteric surfactant having an amine oxide structure.

13. The recording medium (10) according to any one of Claims 7 to 12, wherein a mass ratio of a content (mass%) of the ionic surfactant to a content (mass%) of the polyvinyl alcohol (15) in the foam layer (12) is 0.03 or more and 0.50 or less.

14. The recording medium (10) according to any one of Claims 1 to 13, wherein the foam layer (12) further contains a water-soluble resin having a number-average molecular weight of 100,000 or more, in addition to the polyvinyl alcohol (15).

15. The recording medium (10) according to Claim 14, wherein a mass ratio of a content (mass%) of the water-soluble resin to the total content (mass%) of the polyvinyl alcohol (15) and the thermoplastic resin (14) in the foam layer (12) is 0.07 or more and 0.35 or less.

16. The recording medium (10) according to Claim 14 or 15, wherein the water-soluble resin is a quaternary ammonium salt.

17. The recording medium (10) according to any one of Claims 14 to 16, wherein the water-soluble resin is at least one selected from the group consisting of poly(diallyldimethylammonium chloride) and a copolymer of poly(diallyldimethylammonium chloride).

18. A method for manufacturing a recorded matter including a stereoscopic image, comprising:

applying a foaming promotion liquid to a recording medium (10) for stereoscopic image formation, where the recording medium (10) includes a substrate (11) and a foam layer (12) provided on the substrate (11) and containing a microcapsule-type foam particle (13) that foams by heat, a water-insoluble thermoplastic resin (14), and a polyvinyl alcohol (15), and the foaming promotion liquid contains a foaming promotion component that reduces a foaming initiation temperature of the foam particle (13) and water; and
heating the foam layer (12) of the recording medium (10) applied with the foaming promotion liquid to foam the foam particle (13) to form a stereoscopic image, wherein
the thermoplastic resin (14) is dispersed in the foam layer (12) by a surfactant,
the polyvinyl alcohol (15) has a saponification degree of 70% or more and 92% or less,
the polyvinyl alcohol (15) has a polymerization degree of 1,000 or less, and
a mass ratio of a content (mass%) of the polyvinyl alcohol (15) to a content (mass%) of the thermoplastic resin (14) in the foam layer (12) is 0.10 or more and 0.40 or less.

19. The method for manufacturing a recorded matter including a stereoscopic image according to Claim 18, wherein

the foam particle (13) is a foam particle including a shell layer (16) formed of polyacrylonitrile and a volatile material (17) encapsulated in the shell layer (16), and
the foaming promotion component is at least one selected from the group consisting of 2-pyrrolidone, dimethyl sulfoxide, N,N-dimethylformamide, and N-methyl-2-pyrrolidone.

# FIG. 1

# FIG. 2

## FIG. 3A

24       23       22

A    21

## FIG. 3B

23       24       22

A    21

## FIG. 3C

23       22       24

A    21

Europäisches
Patentamt

European
Patent Office

Office européen
des brevets

# EUROPEAN SEARCH REPORT

**Application Number**

EP 25 16 4044

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2023 138415 A (CANON KK) 2 October 2023 (2023-10-02) * paragraphs [0001], [0006], [0012] - [0045]; figures 1,2 * ----- | 1-19 | INV. B41M3/06 ADD. B41M3/16 |
| A | JP H02 193154 A (MINOLTA CAMERA KK) 30 July 1990 (1990-07-30) * figures 1,2 * * the whole document * ----- | 1-19 | B41M3/18 B44C3/02 B41M7/00 |

**TECHNICAL FIELDS SEARCHED (IPC)**

B41M
B44F
B44C

The present search report has been drawn up for all claims

| Place of search | Date of completion of the search | Examiner |
|---|---|---|
| Munich | 7 August 2025 | Patosuo, Susanna |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 4044

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2025

| Patent document cited in search report | Publication date | Patent family member(s) | Publication date |
|---|---|---|---|
| JP 2023138415 A | 02-10-2023 | NONE | |
| JP H02193154 A | 30-07-1990 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10129116 A

- JP 2023138415 A